Europäisches Patentamt

(19) European Patent Office

Office européen des brevets

(11) Publication number: **0 276 070**
**A2**

# (12) EUROPEAN PATENT APPLICATION

(21) Application number: **88300204.0**

(22) Date of filing: **12.01.88**

(51) Int. Cl.⁴: **G 06 F 15/06**

(30) Priority: **20.01.87 US 4595**

(43) Date of publication of application:
**27.07.88 Bulletin 88/30**

(84) Designated Contracting States: **DE FR GB**

(71) Applicant: **AMERICAN TELEPHONE AND TELEGRAPH COMPANY**
**550 Madison Avenue**
**New York, NY 10022 (US)**

(72) Inventor: **Howard, Richard Edwin**
**445 Harrison Avenue**
**Highlands Park New Jersey 08904 (US)**

**Jackel, Lawrence David**
**31 Stoney Brook Road**
**Holmdel New Jersey 07733 (US)**

**Solla, Sara Agueda**
**10 Franklin Avenue Apt. 6H**
**White Plains New Yrk 10601 (US)**

(74) Representative: **Buckley, Christopher Simon Thirsk et al**
**AT&T (UK) LTD. AT&T Intellectual Property Division 5 Mornington Road**
**Woodford Green, Essex IG8 OTU (GB)**

(54) **Computation networks.**

(57) A large parallel processing network that employs a set of content accessible memories operating in parallel in response to input signals, and operating further in conjunction with a selection network that selects and enables only one of the constituent memories. The selection is based on the value of the stored data. In one embodiment the vectors to be stored are grouped so that the vectors in each group are closer to each other than to vectors in other groups, and each group is stored in a different constituent CAM. The proper CAM is selected in a preprocessing manner with another CAM that is responsive to the input. In another embodiment no grouping of the vectors is required but each constituent CAM develops an analog signal which indicates the measure of closeness of its output to the input. Based on these analog signals, in a post-processing manner, a selection network identifies the proper CAM and enables that CAM to the exclusion of others.

EP 0 276 070 A2

**Description**

COMPUTATION NETWORKS

**Background of the Invention**

This invention relates to circuit segmentation and, more particularly, to the segmentation and organization of highly parallel storage and computation circuits characterized by extensive feedback, which segmentation permits the realization of large storage and computation circuits from a collection of smaller ones.

Parallel processing is highly desirable because it permits the efficient realization of very complex computational processes. One form of such parallel processing takes place in circuits which simulate the suspected operation of biological neural networks and hence have been called "neural networks." Recent developments in electronic and electro-optical neural networks have spurred interest in such networks. It was, for example, shown by J. J. Hopfield that a Liapunov energy function can be defined for the circuit that achieves minima at predesigned output states, and that the circuit can be steered by control signals to reach these minimum states. Thus, a practical embodiment of a neural network became possible which was suitable for large scale integration.

The Hopfield neural network is a highly parallel processing network comprising amplifiers and a feedback network. The Hopfield feedback network has a preselected number of input ports for accepting output signals from some or all of the amplifiers, and an output port for driving each of the amplifiers. Each of the feedback input ports is connected within the feedback network to each and every output port through a conductance of preselected value. It is the collection of conductances within the feedback network that determines the aforementioned minimum states of the neural network. This collection is a form of memory, in that preselected states can be used to define or represent information. A more detailed description of neural networks of this type can be found in "Neurons With Graded Response Have Collective Computational Properties Like Those of Two-State Neurons," by J. J. Hopfield, *Proc. Natl. Sci., USA,* Vol. 81, pp. 3088-92; "Neural Computation of Decisions in Optimization Problems," *Biological Cybernetics,* Vol. 52 (1985), pp. 141-152; U. S. Patent Application Serial Number 693,479, filed on January 2, 1985 for J. J. Hopfield; and U. S. Patent Application Serial Number 795,789, filed on November 7, 1985 for J. J. Hopfield and D. W. Tank. An improved neural network that achieves the same results has been invented by H. P. Graf and described in a patent application filed with the U. S. Patent and Trademark Office (Serial Number____, filed ___). The Graf application is incorporated herein in as Appendix A.

The highly parallel networks of Hopfield and Graf are very robust, but there is a practical limitation on the number of neural cells of this type that can be physically placed on a single chip. As the number of amplifiers increases linearly, the number of cross-connections (the conductances in the Hopfield circuit) in the feedback network increases quadratically. Some partitioning or segmentation schema is, therefore, necessary in order to realize larger memories. More particularly, effective partitioning of the memory in the feedback circuits is required if efficiencies are to be realized.

In conventional random access memories, each memory word is independently accessible and it is therefore relatively easy to group collections of words on a chip. No cooperation between the chips is required because each unit of information is localized to a single memory cell. With the a priori knowledge of the number of words on a memory chip, the particular chip that needs to be accessed can be readily determined (by subtracting, counting, decoding, etc) and thus the desired information can be accessed. In a similar application employing highly parallel processing networks -- e.g., content accessible memories -- the situation is quite different. As discussed in the above-mentioned publications, information units in such a network are not localized to particular single memory cells. Instead, there, is a great deal of cooperation between the elements that combine to form the memory and, therefore, partitioning of the network becomes extremely difficult due to the very extensive feedback interconnections required between the partitioned chips.

It is an object of this invention to realize an architecture that permits efficient segmentation of a large highly parallel processing network.

It is another object of this invention to realize a architecture that permits combining a plurality of highly parallel processing circuits in a cooperative manner.

It is still another object of this invention to realize a segmentation schema that is directly applicable to content accessible memory applications.

**Summary of the Invention**

These and other objects of the invention are realized with an arrangement that employs a set of content accessible memories operating in parallel in response to input signals, and operating further in conjunction with a selection network that selects and enables only one of the constituent memories. The selection is based on the value of the stored data. In one embodiment the vectors to be stored are grouped so that the vectors in each group are closer to each other than to vectors in other groups, and each group is stored in a different constituent CAM. The proper CAM is selected in a preporcessing manner with another CAM that is responsive to the input. In another embodiment no grouping of the vectors is required but each constituent CAM develops an analog signal which indicates the measure of closeness of its output to the input. Based on these analog signals, in a post-processing manner, a selection network identifies the proper CAM and enables that CAM to the exclusion of others.

## Brief Description of the Drawing

FIG. 1 shows the prior art neural network described by Hopfield et al;

FIG. 2 depicts the block diagram of a large parallel processing network created from a collection of smaller parallel processing networks, with preprocessing selection;

FIG. 3 illustrates the FIG. 1 neural network, as augmented to provide a serial output;

FIG. 4 presents the neural network in accordance with the Graf invention shown in Appendix A;

FIG. 5 depicts the block diagram of a large parallel processing network created from a collection of smaller parallel processing networks, with post-processing selection; and

FIG. 6 shows the use of the Graf network of FIG. 4 in the context of the FIG. 5 architecture.

## Detailed Description

Although the principles of the invention are fully applicable to all of the various applications of the highly parallel processing network described by J. J. Hopfield et al, in order to simplify the description in this application and to enhance the understanding of this invention, the following description is primarily directed to the content accessible memory (CAM) application.

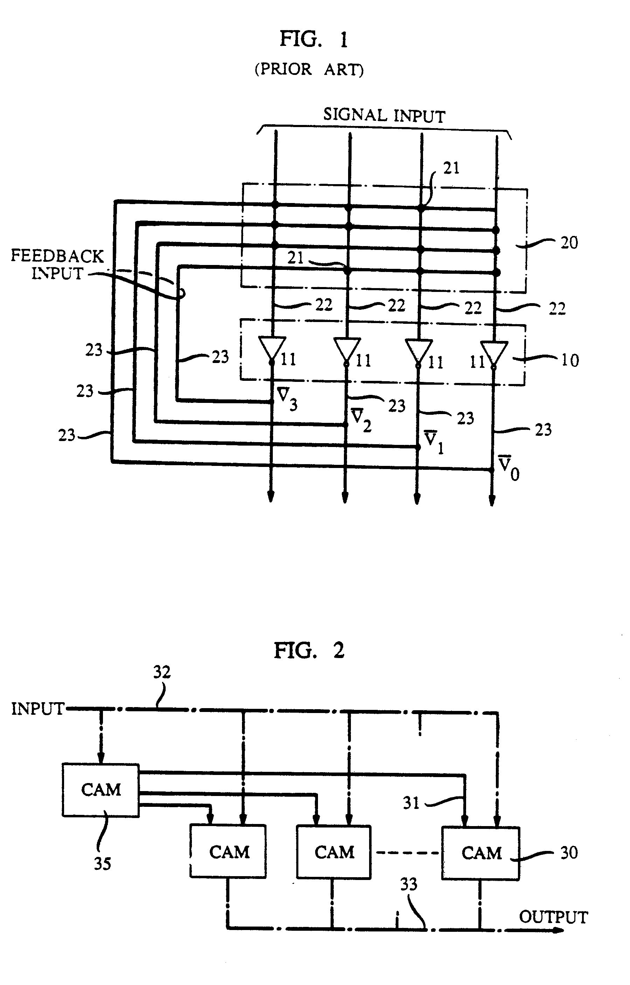

FIG. 1 depicts one embodiment of the highly parallel processing network described by J. J. Hopfield in the aforementioned '479 application. It includes an amplifier network 10 having input and output ports and a feedback network 20 having signal feedback input ports and output ports. The output ports of network 20 (lines 22) are connected to the input ports of amplifier 10. Within feedback network 20 each of the feedback input leads (23) is connected to each and every feedback network output port through a transconductance (21) of preselected value. The signals of lines 23 derive from the outputs of amplifiers 11 in amplifier network 10. Those outputs are also the outputs of the FIG. 1 network.

As disclosed by Hopfield the network of FIG. 1 can act as a content accessible memory. More specifically, the collection of conductances 21 create a condition in the FIG. 1 circuit that is characterized by an energy function which the circuit minimizes. The energy function can be thought of as a surface with peaks and valleys which, in two dimensional space, is akin to a topographical terrain. In operation, the circuit traverses along the surface from whatever position it is placed, along a negative gradient, to the nearest valley. The initial state of the circuit, from whence it moves to the closest local minimum, is created by the input signals. The valley or minimum, in turn, corresponds to the resulting output signals. Thus, when operating as a content accessible memory, the FIG. 1 circuit accepts input signals and in response thereto develops an output signal that corresponds most closely to that input signal (the closest valley in the energy surface). It may be noted in passing that amplifiers 11 have two stable states

--"on" and "off" -- and, consequently, the signals at lines 23 also have two stable levels. Transition between the two levels is analog.

In applications where the memory size is larger than is possible to realize on a single integrated circuit (VLSI) chip, some segmentation must be effected. Merely separating one large FIG. 1 network into a plurality of smaller FIG. 1 networks on different chips, with some information stored in each of the plurality of networks will not perform the desired function. Each one of the chips would develop an output signal that is closest to the input signal but, without more, no convenient means would be available to identify which one of the networks produces the output that is closest (when comparing the outputs of the different networks) to the presented input.

In accordance with one principle of the invention, this problem is obviated by utilizing the fact that, in many circumstances, the content-accessible memory is static. That is, the memory contains a relatively stable data base and, consequently, the user has freedom with respect to what content is placed in which one of the FIG. 1 circuits that combine to form the larger memory. In such static memory applications, in accordance with this principle of our invention the stored information is grouped or clustered so that the distance between a stored vector (representing an information unit) in a particular FIG. 1 circuit and all other stored vectors in that same FIG. 1 circuit is smaller than the distance between the stored vector and any other vector stored in any of the other FIG. 1 circuits. That is, the intra-chip distances are uniformly smaller than the inter-chip distances. The term "distance", in the context of this disclosure, is a measure of the difference (in accordance with some preselected metric) between the stored vectors.

Viewed differently, the energy surface of the large network is divided into a prechosen number of surface areas, and the vectors contained within each one of the divided surface areas are stored in one of the FIG. 1 circuits. What remains then, is to preprocess the input signal and develop therefrom a relatively coarse indication of which of the various FIG. 1 circuits is most likely to contain the sought information. This can be done with a separate selecting content accessible memory that is also responsive to the input signal but which is constructed with an energy function having one valley corresponding to each one of the divided surface areas, and a ridge pattern that closely follows the ridge pattern along which the original energy function surface was divided.

FIG. 2 depicts one realization of the above-described principle of our invention. Blocks 30 are the constituent content accessible memory units, constructed similarly to the FIG. 1 circuit, into which information is placed as described above. That is, each one of elements 30 contains vectors having the attribute that the distance between any one stored vector within that element 30 and all other stored vectors within that same element 30 is smaller than the distance between that stored vector and any and all stored vectors in any other element 30. Each element 30 in FIG. 2 also includes an enabling input 31, which when not enabled, causes the output of its associated network 30 to be unavailable.

All of the CAMs 30 are responsive, in parallel, to the applied input signals on bus 32, and the outputs of networks 30 are connected in parallel to form output bus 33. With this interconnection pattern, when one of the networks 30 is enabled, its output is presented as the output of the larger memory. The enabling of one of the memory circuits is realized in FIG. 2 with content accessible memory 35 which is also responsive to the input signal. The circuit of CAM 35 is, of course, substantially smaller than the circuit of CAMs 30 because the number of outputs of network 35 is only equal to the number of different CAMs 30 that are being employed.

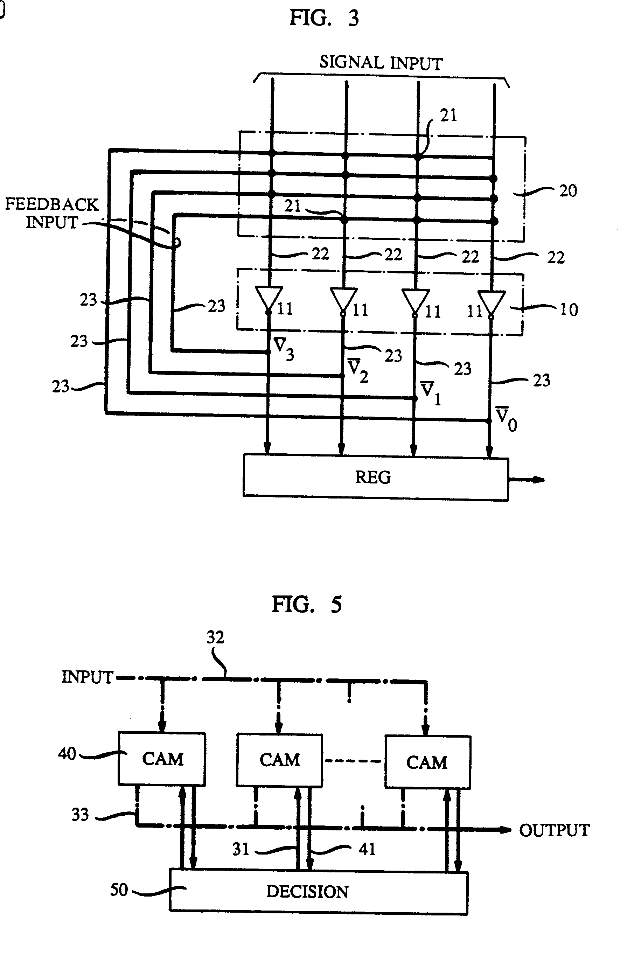

One important advantage of the FIG. 2 realization of our invention relates to the fact that none of the output signals from any of the constituent CAMs 30 are needed for the proper operation of the other CAMs 30. Consequently, the analog transitions of the amplifiers within each CAM }30 need not be communicated to the outside; and this permits the use of digital techniques to encode the output signal and to employ parallel to serial conversion as a means for reducing the number of output leads from each of the CAMs 30. This, of course, is very important where very long vectors are stored and where the VLSI chip is pin-limited rather than "real estate"-limited. FIG. 3 illustrates one of the CAM 30 of FIG. 2.

The above-described realization of our invention, as depicted by FIG. 2, can be thought of as a segmentation schema with a preprocessor for selecting the desired constituent CAM 30. An alternative segmentation schema might use **post-processor** selection. Post-processing selection, however, requires the comparison of the outputs of the constituent CAMs and, as already mentioned above, no signals are readily available in the FIG. 1 embodiment to assist in that comparison. The highly parallel processing network described by Graf in the attached Appendix A, affords that capability.

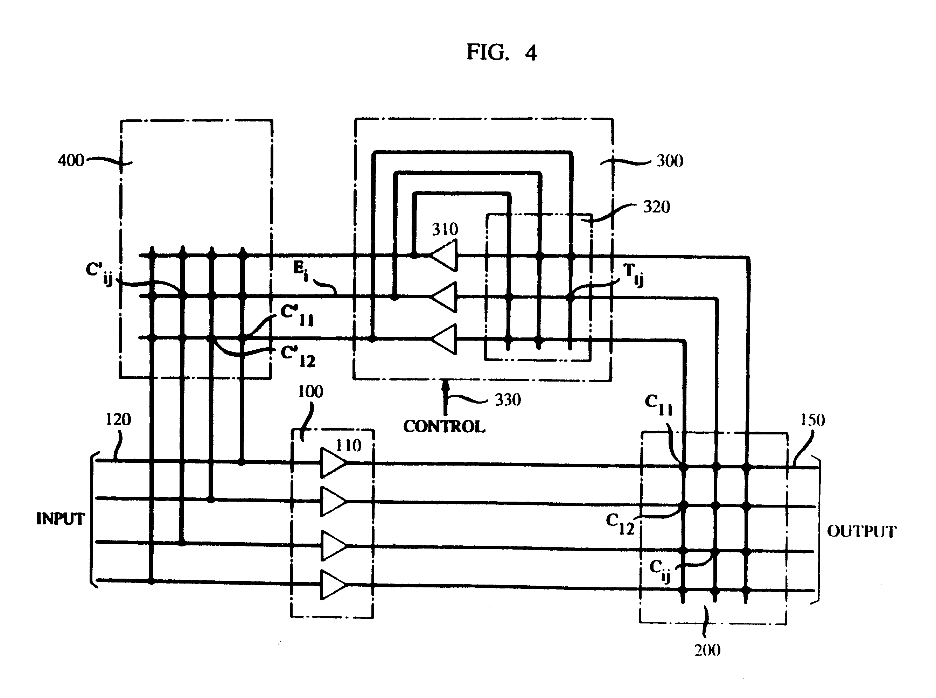

As described in Appendix A, the Graf computation network, also depicted in FIG. 4, may include a decision network 300 which develops a multi-bit output where one bit is high, or "1", and the other outputs are low, or "0". The network of FIG. 4 also includes a feedback arrangement that is separable into two serially connected networks (400 and 200) with an amplifier network (100) interposed therebetween. Network 400 has its inputs connected to the outputs of the decision network 300 and is arranged to develop K sets of excitatory and inhibitory drive signals, where K is the number of stored vectors. Each "1" in the stored vector gives rise to an excitatory drive signal while each "0" gives rise to an inhibitory drive signal. For each different output state of the decision network, a different one of the K sets appears at the output of the first network 400. The output leads of the first network 400, which also comprise the network input leads, are connected to network 200 via amplifier network 100. Network 200 develops K output signals that are proportional to the projection of the input signals applied to network 200 on the stored vectors.

In operation, the Graf circuit employs a control signal on lead 33 that disables decision network 300 in order to effect a controlled operation of the network. An input signal is applied to amplifier network 100 while network 300 is disabled, causing network 200 to develop analog output signals, as stated above, corresponding to the projection of the input signal on the stored vectors. The largest analog signal that corresponds to the stored vector that most closely resembles the input signal (where the term "closely" relates to the particular metric employed within the network 200). When control signal 330 enables network 300, the previously described operation of network 300 turns "on", or enables, one output, associated with the input having the largest analog value, and turns "off" or disables, all other outputs. The enabled output enables one of the input lines to network 400 and, in response thereto, network 400 provides appropriate drive signals to place the amplifiers of network 100 in the state corresponding the stored vector that develops the largest analog projection signal.

It is this analog signal from network 200 which, when harnessed, assists in effecting the necessary post-processing when a plurality of CAMs are sought to be employed as a single content accessible memory.

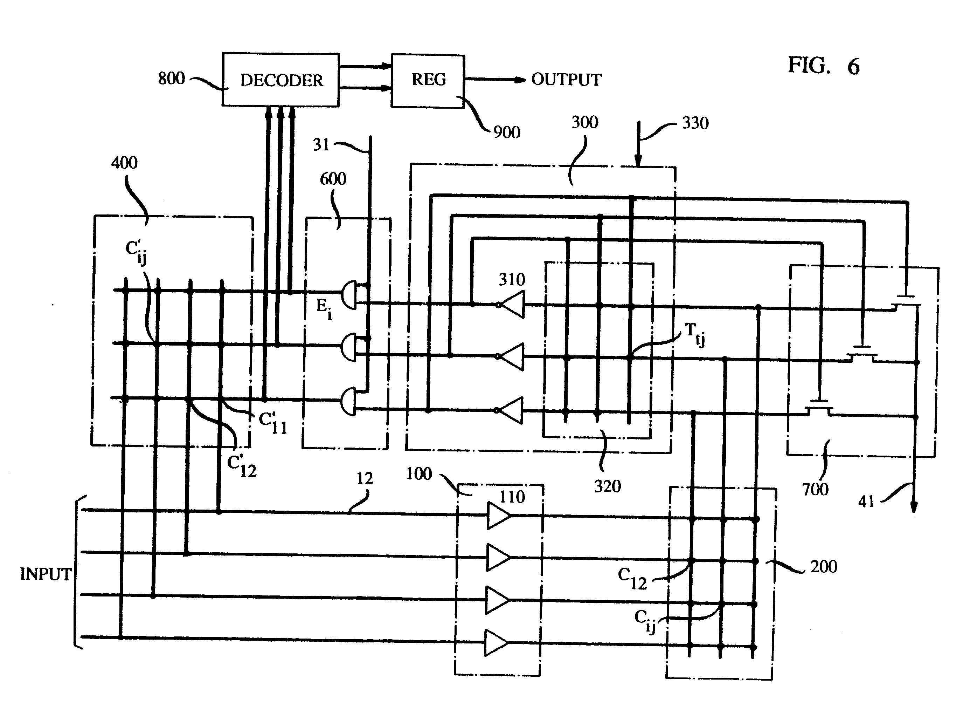

FIG. 5 presents a block diagram of a second organization of a large content accessible memory realized with a plurality of smaller content accessible memories. In FIG. 4, the input signal on bus 32 is applied in parallel to constituent CAMs 40. Each CAM 40 comprises input ports to which input bus 32 is connected, output data ports connected to output bus 33, enable input port 31, and proximity indication line 41. The output signals at lines 41 of the constituent CAMs 40 are all connected in FIG. 4 to a decision network 50. Network 50 thus has N inputs, where N is the number of constituent CAMs 40, from lines 41, and N outputs for enabling the N constituent CAMs 40 via ports 31. Decision network 50 merely compares the proximity indications applied thereto on lines 41 and selects for enabling that CAM 40 which possesses at its output line 41 the greatest proximity indication signal.

In the context of the FIG. 4 embodiment, the analog signal at the output of network 200 can serve as the proximity indication signal of line 41, provided that network 300 is not enabled by control 330 before a decision is made as to which of the constituent CAMs ought to be enabled. FIG. 5 presents one realization of an augmented network similar to the network depicted in FIG. 3 which achieves the desired result. It includes the elements of FIG. 3 and, in addition, there is interposed a gating block 600 between decision network 300 and network 400. Gating block 600 is controlled by the enabling signal on port 31. The input signals to decision block 300 (the output signals from network 200), are applied to a switch network 700. Network 700 selects the lead with the largest analog signal from network 200, under control of the output signals from network 300 and presents that selected analog signal at output line 41.

In operation, the sequence of events is as follows: control port 31 is disabled; an input is applied through amplifier block 100 to network 200; network 200 develops analog signals applied to blocks 300 and 700; control port 31 is enabled, network 300 settles to a state that is indicative of which of the analog signals is largest; network 700 applies that largest analog signal to line 41; the output of line 41 is applied to decision network 50 (FIG. 4); decision network 50 enables one of its outputs; the enabled output is applied to the selected constituent CAM of FIG. 5 (lead 31); and the block 600 of the constituent CAM opens up the path between decision network 300 and network 400, thereby enabling the CAM to produce the desired output. The output in the FIG. 6 circuit is taken from the input to block 400, as described in connection with FIG. 8 in the Appendix, via the serial connection of decoder 800 and parallel-to-serial connection register 900, applying the input of network 400 to the output of the FIG. 6 network.

**Claims**

1. A modular content addressable signal translation apparatus responsive to a plurality of input signals to produce a plurality of translated output signals, said apparatus comprising:

a plurality of similar content addressable signal translation modules;

means for applying said input signals to all of said modules, and

content responsive selection means for selecting one, and only one, of said modules.

2. The signal translation apparatus according to claim 1 wherein

the contents of each of said modules meets preselected clustering criteria, and

said selection means is responsive to said input signals to enable the output of only the selected one of said modules.

3. The signal translation apparatus according to claim 1 wherein

the contents of each of said modules is arbitrary, and

said selection means is responsive to distance signals to select one output from all of the outputs of said modules.

4. A content-addressable memory comprising

a plurality of identical content-addressable memory submodules, together forming said memory,

means for applying input signals in parallel to all of said submodules, and

a content-addressable submodule selection circuit, for selecting one and only one of said submodules.

5. The memory according to claim 4 wherein

each of said submodules produces a matching signal representing the nearness of match of each output signal to the common input signal, and

means utilizing said matching signals to select the submodule producing the largest matching signal.

6. The memory according to claim 4 wherein

the contents of each of said submodules are clustered into minimal intracluster and maximal intercluster distances, and

means, including a content-addressable memory responsive to said input signals, for identifying the submodule cluster closest to said input signals.

7. A content-addressable memory comprising

a plurality of content-addressable modules cooperating with means for selecting one of said modules,

said means for selecting being responsive to information stored in said plurality of modules.

8. A segmented signal translation apparatus responsive to a plurality of input signals to produce a plurality of translated output signals, said apparatus comprising: a plurality of substantially similar apparatus segments together making up said apparatus,

means for applying said input signals to all of said segments in parallel, and

means for deriving said translated output signals from one and only one of said segments,

said means for deriving being responsive to the entire content of all of said input signals.

9. A content responsive signal translating cell comprising

a storage network for storing a plurality of information vectors,

a feedback network around said storage network,

said feedback network including two signal translating circuits separated by a bank of isolating amplifiers,

first gating means for isolating said storage network from the input to said feedback network,

second gating means for enabling the output of said feedback network, and

means responsive to the outputs of said storage network and the outputs of said feedback network for selecting the maximum feedback signal.

10. The content responsive signal translating cell according to claim 9 where is

said storage network and said feedback network both include conductor matrices the crosspoints of which are connected by preselected conductances representing, in combination, particular signal translation values.

0276070

## FIG. 1
(PRIOR ART)

SIGNAL INPUT

FEEDBACK INPUT

$\bar{V}_3$  $\bar{V}_2$  $\bar{V}_1$  $\bar{V}_0$

## FIG. 2

INPUT

CAM

CAM  CAM  CAM

OUTPUT

0276070

## FIG. 3

SIGNAL INPUT

FEEDBACK INPUT

21

20

21

22 22 22 22

23

23

23

11 11 11 11

10

$\overline{V}_3$

$\overline{V}_2$

23

23

$\overline{V}_1$

23

$\overline{V}_0$

REG

## FIG. 5

32

INPUT

40 — CAM CAM —— CAM

33

31 41

OUTPUT

50 — DECISION

FIG. 4

FIG. 6